# EUROPÄISCHE PATENTSCHRIFT

(11) **EP 1 880 897 B1**
(45) Veröffentlichungstag und Bekanntmachung des Hinweises auf die Patenterteilung: **16.10.2013**
(21) Anmeldenummer: 07013929.0
(22) Anmeldetag: 17.07.2007
(51) Int. Cl.: B60N 2/68, B60N 2/42

(54) **Rückenlehne eines Kraftfahrzeugsitzes**
Backrest for a motor vehicle seat
Dossier pour sièges de véhicules automobiles

(30) Priorität: 20.07.2006 DE 102006033558
(43) Veröffentlichungstag der Anmeldung: 23.01.2008
(73) Patentinhaber: Bayerische Motoren Werke Aktiengesellschaft, 80809 München (DE)
(72) Erfinder: Müller, Andreas, 84079 Bruckberg (DE); Edelmann, Ralph, 84453 Mühldorf (DE)

(56) Entgegenhaltungen:
- EP-A- 1 477 359
- US-A- 5 580 124
- US-A1- 2005 264 052

## Beschreibung

Die Erfindung betrifft eine Rückenlehne eines Kraftfahrzeugsitzes nach dem Oberbegriff des Patentanspruchs 1, die in dem als der nächstliegende Stand der Technik angesehenen Dokument US 2005/264052 A1 beschrieben ist.

Aus der EP 1 477 359 A1 ist auch eine Rückenlehne eines Kraftfahrzeugsitzes bekannt, die eine Tragschale und eine Dekorschale aufweist. Auf der Vorderseite der Tragschale ist ein Polster anbringbar. Die Dekorschale ist parallel zur Tragschale angeordnet, wobei zwischen der Dekorschale und der Tragschale ein flächiges Schaumteil angeordnet ist.

Ferner ist aus der DE 103 21 289 A1 eine Rückenlehne mit einer Tragstruktur bekannt, die aus zwei Kunststoffschalen besteht. Die Kunststoffschalen umschließen einen Hohlraum, in dem sich zumindest ein formstabiles Schaumteil befindet, das energieabsorbierende Eigenschaften hat.

In Personenkraftfahrzeugen moderner Bauart grenzt oft unmittelbar an die Rückenlehne einer hinteren Sitzreihe der Laderaum an. Bei einem Crash muss die Rückenlehne dem Passagier Schutz vor von hinten auf die Rückenlehne aufprallendem Ladegut bieten. Dazu kamen bisher Konstruktionen aus Stahl zum Einsatz, da Stahl hohe Spannungen aufnehmen kann. Kunststoff hat im Vergleich zu Stahl schlechtere mechanische Kennwerte, sodass die Gefahr besteht, dass eine Rückenlehne mit einer Tragstruktur aus Kunststoff bei einem Aufprall von Ladegut von hinten zerbricht.

Aufgabe der Erfindung ist es, eine Rückenlehne eines Kraftfahrzeugsitzes zu schaffen, die Schutz vor aufprallendem Ladegut bietet und ein geringes Gewicht aufweist.

Diese Aufgabe wird mit einem Kraftfahrzeug mit zumindest einer Rückenlehne eines Kraftfahrzeugsitzes mit den Merkmalen des Patentanspruchs 1 gelöst.

Erfindungsgemäß besteht eine Rückenlehne eines Kraftfahrzeugsitzes zumindest aus einer Tragschale aus Kunststoff, auf deren Vorderseite ein Polster anbringbar ist, und aus einer Dekorschale aus Kunststoff, die parallel zur Tragschale angeordnet ist. Zwischen der Dekorschale und der Rückseite der Tragschale ist ein formstabiles, flächiges Schaumteil angeordnet, das energieabsorbierende Eigenschaften hat, und das flächig sowohl an der Tragschale als auch an der Dekorschale anliegt. Die Tragschale bildet die eigentliche Tragstruktur der Rückenlehne. Die Tragschale und die Dekorschale sind aufeinander zu verlagerbar, wobei sich die Dekorschale nicht an der Tragschale in Richtung der Verlagerung abstützt. Die Dekorschale bildet die sichtbare Rückseite der Rückenlehne.

Wenn nun Ladegut von hinten auf die Dekorschale aufprallt, kann diese in Richtung Tragschale nachgeben, da das dazwischen angeordnete Schaumteil durch die Aufprallenergie deformiert bzw. komprimiert wird. Das Schaumteil absorbiert dabei einen Teil der Aufprallenergie. Die Dekorschale gibt durch die Deformation des Schaumteils soweit nach, dass die in der Dekorschale entstehenden Spannungen so klein bleiben, dass die Dekorschale nicht durch den Aufprall des Ladeguts beschädigt wird. Die erfindungsgemäße Rückenlehne kann also aus Kunststoffschalen bestehen, da die beiden Schalen aufeinander zu verlagerbar sind. Wichtig dabei ist es, dass sich die Dekorschale nicht an der Tragschale in Richtung der Verlagerung abstützt, sodass die Verlagerung der Dekorschale auf die Tragschale zu nicht behindert wird. Im Vergleich zu konventionellen Rückenlehnen mit einer Tragstruktur aus Stahl ist die erfindungsgemäße Rückenlehne deutlich leichter und kostengünstig herstellbar. Wenn die Rückenlehne umklappbar ist, ist sie aufgrund des geringen Gewichts mühelos und komfortabel betätigbar. Dennoch bietet sie den Passagieren einen Schutz vor von hinten aufprallendem Ladegut.

Vorteilhafterweise ist die Dekorschale so ausgelegt, dass sie bei einem Aufprall von Ladegut die Aufprallenergie großflächig verteilt. Dadurch kann bei einem Aufprall das Schaumteil besonders viel Energie absorbieren, da alle Bereiche des Schaumteils deformiert werden.

Bevorzugt sind in die Tragschale Aufnahmen für Befestigungselemente der Rückenlehne, für eine Kopfstützenführung, für eine Gurtführung, für eine Skisackhalterung, für eine Bezugsbefestigung und / oder für eine Mittelarmlehne integriert. Diese Integration weiterer Funktionen in die Tragschale ist nur mit geringen Kosten verbunden, da die Aufnahmen bei der Herstellung der Tragschale mit angespritzt oder in Form von Inserts mit eingespritzt werden können.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine perspektivische Explosionsdarstellung einer Rückenlehne eines Kraftfahrzeugsitzes und
- Fig. 2: einen Schnitt durch die Rückenlehne.

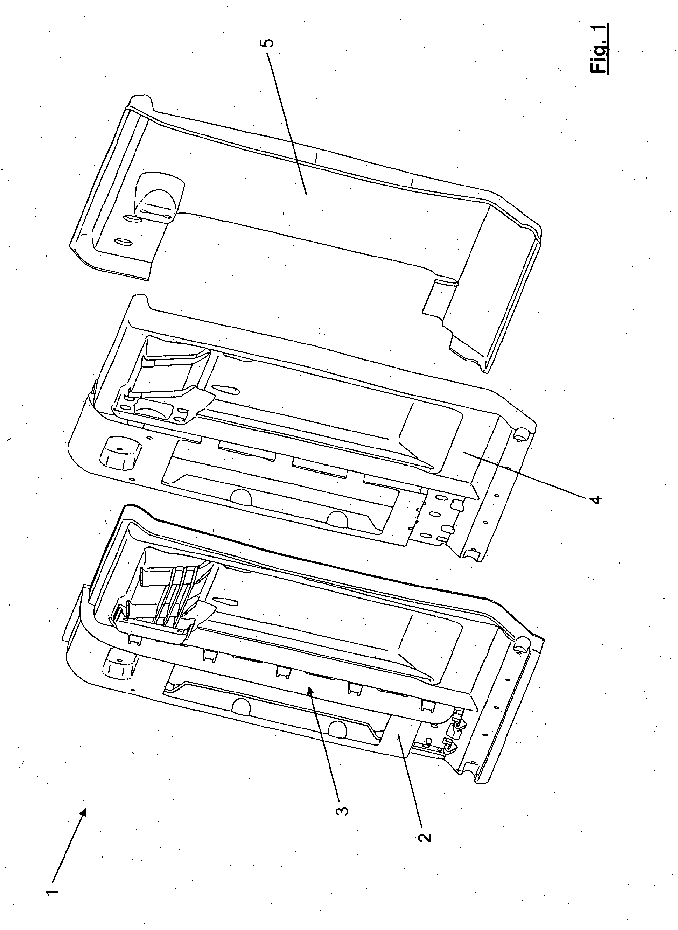

In Fig. 1 ist eine umklappbare Rückenlehne 1 einer Rücksitzbank in einem Personenkraftwagen der Kombinationsbauart dargestellt. Die Rückenlehne 1 weist eine Tragschale 2 aus Kunststoff auf, die die eigentliche Tragstruktur der Rückenlehne 1 bildet. Auf der Vorderseite 3 der Tragschale 2 ist ein Polster anbringbar, das mit einem Bezug überzogen sein kann. Auf der Rückseite der Tragschale 2 liegt flächig ein Schaumteil 4 an. An dem Schaumteil 4 wiederum liegt auf der der Tragschale 2 abgewandten Seite flächig eine Dekorschale 5 aus Kunststoff an. Die Dekorschale 5 bildet die sichtbare Rückwand der Rückenlehne 1 und liegt in etwa parallel zur Tragschale 2.

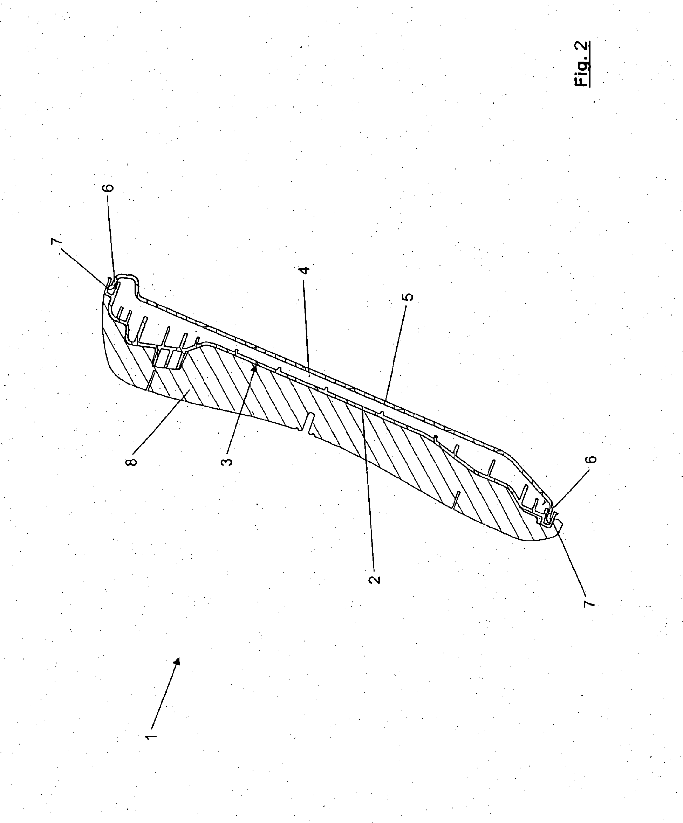

In Fig. 2 ist die Rückenlehne 1 im Schnitt gezeigt, wobei auf der Vorderseite 3 der Tragschale 2 ein Polster 8 mit Bezug angebracht ist. Im Schnitt ist gut zu sehen, dass der Rand 6 der Dekorschale 5 umlaufend in eine vom Randbereich der Tragschale 2 gebildete Nut 7 eingesteckt ist. Dadurch ist die Dekorschale 5 in allen Richtungen in der Ebene der Rückenlehne 1 relativ zur Tragschale 2 fixiert. Allerdings ist der Rand 6 der Dekorschale 5 nicht bis zum Anschlag in die Nut 7 eingesteckt, da dies aufgrund der Dicke des Schaumteils 4 nicht möglich ist.

Hinter der Rückenlehne 1 schließt sich ohne Abtrennung der Laderaum des Fahrzeugs an. Bei einem Unfall oder bei einer anderweitigen scharfen Verzögerung des Fahrzeugs kann es passieren, dass schweres, im Laderaum abgelegtes Ladegut gegen die Rückenlehne 1 rutscht oder fliegt. Die Rückenlehne 1 muss zum Schutz des Passagiers das Ladegut aufhalten können, um Verletzungen des Passagiers zu verhindern. Bei der dargestellten Rückenlehne 1 schlägt das Ladegut gegen die Dekorschale 5. Diese verteilt die eingeleitete Aufprallenergie auf die gesamte Fläche der Rückenlehne 1 und überträgt sie auf das Schaumteil 4. Dieses deformiert sich und absorbiert dabei viel Aufprallenergie. Die verbleibende Aufprallenergie kann von der Tragschale 2 aufgenommen werden, ohne dass diese beschädigt wird.

Die Dekorschale 5 besteht aus Kunststoff, sodass sie durch das aufprallende Ladegut zerbrechen würde, wenn sie nicht nachgeben kann. Deshalb kann die Dekorschale 5 zur Tragschale 2 hin verlagert werden, wobei das Schaumteil 4 komprimiert wird und dadurch Energie absorbiert. Auf diese Weise kann die Dekorschale 5 ausreichend bei einem aufprallenden Ladegut nachgeben, sodass sie nicht beschädigt wird.

Die gesamte Rückenlehne 1 besteht also aus einer Tragschale 2 und einer Dekorschale 5 aus Kunststoff, zwischen denen ein Schaumteil 4 angeordnet ist. Im Vergleich zu konventionellen Rückenlehnen, die zum Schutz vor Ladegut mindestens ein flächiges Blechbauteil aufweisen, ist die Rückenlehne 1 somit wesentlich leichter. Auch können weitere Funktionen in die Tragschale 2 integriert sein. Beispielsweise können an die Tragschale 2 Aufnahmen für einen Skisack oder für eine Mittelarmlehne einteilig angespritzt sein. Auch können in die Tragschale 2 Inserts mit eingespritzt sein, die beispielsweise eine Lagerstelle zum Umklappen der Rückenlehne oder eine Verriegelung für eine umklappbare Rückenlehne bilden.

Das geringe Gewicht der Rückenlehne 1 ist insbesondere bei einer umklappbaren Rückenlehne von Vorteil, da die Kraft, die zum Umklappen der Rückenlehne 1 benötigt wird, um so geringer ist, je leichter die Rückenlehne 1 ist.

## Patentansprüche

1. Rückenlehne (1) eines Kraftfahrzeugsitzes, zumindest bestehend aus einer Tragschale (2) aus Kunststoff, auf deren Vorderseite (3) ein Polster (8) anbringbar ist, und einer Dekorschale (5) aus Kunststoff, die parallel zur Tragschale (2) angeordnet ist, wobei zwischen der Dekorschale (5) und der Rückseite der Tragschale (2) ein formstabiles, flächiges Schaumteil (4) angeordnet ist, das energieabsorbierende Eigenschaften hat, und die Tragschale (2) und die Dekorschale (5) aufeinander zu verlagerbar sind, wobei sich die Dekorschale (5) nicht an der Tragschale (2) in Richtung der Verlagerung abstützt, **dadurch gekennzeichnet, dass** die Tragschale (2) die eigentliche Tragstruktur der Rückenlehne bildet.

2. Rückenlehne nach Anspruch 1, **dadurch gekennzeichnet, dass** in die Tragschale (2) Aufnahmen für Befestigungselemente der Rückenlehne (1), für eine Kopfstützenführung, für eine Gurtführung, für eine Skisackhalterung, für eine Bezugsbefestigung und / oder für eine Mittelarmlehne integriert sind.

3. Rückenlehne nach Anspruch 1 oder 2, **dadurch gekennzeichnet, dass** die Dekorschale (5) so ausgelegt ist, dass sie bei einem Aufprall von Ladegut die Aufprallenergie großflächig verteilt.

4. Rückenlehne nach einem der vorhergehenden Ansprüche, **dadurch gekennzeichnet, dass** in die Tragschale (2) zumindest ein Insert für eine Lagerstelle und / oder für eine Verriegelung integriert ist.

## Claims

1. A back rest (1) of a motor-vehicle seat, comprising at least one plastic bearing shell (2) with a front (3) for attachment of upholstery (8), and a plastic decorative shell (5) disposed parallel with the bearing shell (2), a dimensionally stable flat foam part (4) having energy-absorbing properties being disposed between the decorative shell (5) and the back of the bearing shell (2), and the bearing shell (2) and the decorative shell (5) being movable relative to one another, wherein the decorative shell (5) does not abut the bearing shell (2) in the direction of movement, **characterised in that** the bearing shell (2) is the actual structure bearing the back rest.

2. A back rest according to claim 1, **characterised in that** the bearing shell (2) incorporates receivers for components for fastening the back rest (1), for centring a head rest, for guiding the belt, for holding a ski bag, for fastening a cover, and/or for a central arm rest.

3. A back rest according to claim 1 or claim 2, **characterised in that** the decorative shell (5) is constructed so that after a collision with loaded material, the energy of impact is distributed over a large area.

4. A back rest according to any of the preceding claims, **characterised in that** at least one insert for a bearing and/or for a locking means is incorporated in the bearing shell (2).

## Revendications

1. Dossier (1) pour siège de véhicule automobile constitué par au moins une coquille support (2) en matériau synthétique sur la face avant (3) de laquelle peut être ajouté un coussin (8) et d'une coquille de décoration (5) en matériau synthétique qui est montée parallèlement à la coquille support (2), entre la coquille décorative (5) et la face arrière de la coquille support (2) étant interposée une partie en mousse (4) plate indéformable ayant des caractéristiques d'absorption de l'énergie, et la coquille support (2) et la coquille dé décoration (5) pouvant être déplacées l'une par rapport à l'autre, la coquille de décoration (5) ne s'appuyant pas contre la coquille support (2) dans la direction de déplacement,
**caractérisé en ce que**
la coquille support (2) forme la structure support propre du dossier.

2. Dossier conforme à la revendication 1,
**caractérisé en ce que**
dans la coquille support (2), sont intégrés des organes de réception d'éléments de fixation du dossier (1), d'organes d'actionnement d'un appuie tête, d'organes d'actionnement d'une ceinture de sécurité, d'un dispositif support de glissière, d'une fixation de garniture et/ou d'un accoudoir.

3. Dossier conforme à la revendication 1,
**caractérisé en ce que**
la coquille de décoration (5) est réalisée de sorte que, en cas d'impact de charge, l'énergie d'impact se répartisse sur une grande surface.

4. Dossier conforme à l'une des revendications précédentes,
**caractérisé en ce que**
dans la coquille support (2) est intégré au moins un insert pour un point d'appui et/ ou pour un verrouillage.
